Europäisches Patentamt

(19) European Patent Office

Office européen des brevets

(11) EP 0 995 055 B1

(12) **EUROPEAN PATENT SPECIFICATION**

(45) Date of publication and mention
of the grant of the patent:
**13.10.2004 Bulletin 2004/42**

(21) Application number: **97929034.3**

(22) Date of filing: **15.07.1997**

(51) Int Cl.$^7$: **F16H 1/32**, F16H 57/10,
B66D 1/04

(86) International application number:
**PCT/AU1997/000443**

(87) International publication number:
**WO 1998/003804 (29.01.1998 Gazette 1998/04)**

(54) **GEAR PROFILE FOR ORBITAL GEAR TRANSMISSIONS, AND ORBITAL GEAR TRANSMISSION AND WINCHES UTILISING ORBITAL GEAR TRANSMISSIONS**

ZAHNRADPROFIL FÜR PLANETENGETRIEBE, PLANETENGETRIEBE UND WINDEN DIE EIN PLANETENGETRIEBE VERWENDEN

PROFIL D'ENGRENAGE DESTINE A DES TRANSMISSIONS A ENGRENAGE PLANETAIRE, TRANSMISSION ET CABESTANS A ENGRENAGE PLANETAIRE METTANT EN OEUVRE UN TEL PROFIL

(84) Designated Contracting States:
**AT BE CH DE DK ES FI FR GB GR IE IT LI LU MC NL PT SE**

(43) Date of publication of application:
**26.04.2000 Bulletin 2000/17**

(73) Proprietor: **Aimbridge Pty. Ltd.**
**Melbourne, VIC 3000 (AU)**

(72) Inventor: **WILLMOT, Eric, Paul**
**Melba, ACT 2615 (AU)**

(74) Representative: **COHAUSZ & FLORACK**
**Patent- und Rechtsanwälte**
**Bleichstrasse 14**
**40211 Düsseldorf (DE)**

(56) References cited:
**EP-A- 0 286 760**          **AU-A- 3 411 868**
**AU-A- 5 899 690**          **AU-A- 8 415 882**
**FR-A- 2 366 466**          **US-A- 1 538 008**
**US-A- 2 128 815**          **US-A- 5 398 904**

• **DERWENT ABSTRACT, Accession No. 93-108325/13, Class Q64, XP002948951, & SU,A,1 728 560 (MOGIL MECH ENG INST), 23 April 1992.**
• **DERWENT ABSTRACT, Accession No. 93-343640/43, Class Q64, XP002948952, & SU,A,1 768 832 (MOGIL MECH ENG INST) 15 October 1992.**

## Description

This invention relates to a gear profile for an orbital gear transmission, an orbital gear transmission and winches such as deck winches for yachts and hoists for lifting heavy loads, which include orbital gear transmissions.

The transmission of power involving large torque loads through rotary machines is normally done by means of ' various gear systems. When large ratio reductions and accompanying torque conversion is required it is common practice to use either spur or planetary gear trains. These involve many elements and tend to be bulky. A worm and wheel drive provides a simple alternative but because the gear engagement depends on sliding contact, these machines are very inefficient under large loads. Spur and planetary gears use gear teeth which operate in rolling contact by using gear teeth with their surfaces in the form of involutes. This produces highly efficient transmission.

Orbital gear systems, which operate by causing one gear with externally formed teeth to orbit while engaged about another while engaging teeth formed on its inner surface have been known for some time. It has been further known that such gear systems have the potential to provide very great reductions from relatively simple machines.

Unlike spur or epicycle planetary gear systems, where tooth engagement is predicted upon two cylinders rolling together upon their external surfaces, orbital gears cause one cylinder to roll on the inner surface of another. The teeth on spur gears or racks execute small epicycles on the surfaces of the cylinders and hence the engagement process is more or less tangential to the surfaces. This motion generates the involute surfaces of the teeth surfaces.

Orbital gears, on the other hand, execute cycloidal motion against the inner surface of the internal gear, and hence the engagement process is essentially radial and teeth with involute gear forms produce only sliding contact with high friction under load. Up until now this has made orbital gears little more than engineering curiosities.

In an attempt to make use of other important features of orbital gears some enterprises have tried to use simple cycloidal teeth forms. This form still produces sliding contact and although the incorporation of and array of bearings reduces this frictional problem it vastly increases the size and complexity of such machines which severely limits their use.

The European patent 0 286 760 application EP A1, which constitutes the closest prior art, is typical of an orbital gear, system which has an inner gear and an outer gear and produces significant sliding contact between the gear teeth of the inner and outer gears.

Clearly therefore a need exists to develop a new gear from which allows orbital gear systems to employ only rolling tooth contact while maintaining the fundamental principle of rigid body gear contact to ensure that their pitch circle roll together without slippage.

The invention provides an orbital gear system, including:

an inner gear and an outer gear;
the inner gear having a plurality of external teeth, the plurality of external teeth having a contact surface and a opposite surface, the inner gear having a pitch circle, the contact surface having a point of inflection located on the pitch circle of the inner gear;
the outer gear having a plurality of internal teeth for engagement with the external teeth of the inner gear, the internal teeth having a contact surface for engaging the contact surface of the external teeth of the inner gear, the outer gear having a pitch circle; and

characterised by
wherein, when the inner gear and outer gear are assembled for transmission of power from one of the gears to the other of the gears, the inner and outer gear undergo substantially radial engagement and point contact with the point of inflection of the external teeth engaging and rocking over only a point on the contact surface of the internal gear substantially where the pitch circle of the outer gear intersects the contact surface of the outer gear, wherein the contact surface has a sinusoidal profile.

The first aspect of the invention also provides a rotary transmission mechanism, including:

a first body having contact elements;
a second body having contact elements for engaging the contact elements of the first body and transferring rotary motion from the first body to the second body;
one of the first body or second body being arranged for orbital motion relative to the other of the first or second body; and
the elements of the first body and second body in contact with one another, when rotary motion is transferred, execute cupsoid cycloidal motion with respect to each other and engage radially by a rocking motion between the elements with one of the elements rocking on substantially a point of a surface of the other of the elements.

The first aspect of the present invention provides a gear profile which greatly improves the performance of orbital gear systems and orbital gear transmissions. The gear, system and transmission of this aspect of the invention abides by rolling gear principles but prevents slippage between pitch circles of the inner and outer gears. The rolling contact occurs at a point, for example approximately 4% of the cycle of each gear, but with orbital gear systems more gears are in engagement with one another. The present invention particularly enables orbital gears having pitch circles of very similar diameter. Since the contact occurs the pitch circles of the inner and outer gears very smooth operation of the gears. The sinusoid which forms part of the contact surface of the inner gear is related to two parameters of the system, namely the eccentricity of the orbital system and the diameter of the pitch circle for a given number of teeth. The gears may be made by sophisticated machines such as laser cutters or wire cutters but can also be made by shapers such as a Fellows shaper and tools such as a Hobb tool can be constructed on the principles for manufacture of such gears. Orbital gear systems using the teeth profile according to this aspect of the invention also enables very low reductions from simple machines and the ability to stop under load and remains stationary until the cycle is activated by the input to the transmission. Furthermore, the transmission is easily disengaged by release of an orbit control mechanism in the orbital system to effectively place the transmission into neutral.

Preferably the contact surface has a sinusoidal profile with the sinusoidal profile being defined by the following equation:

$$y = f(D)\, \mathrm{Sin}\{\pi WD\theta g\,(\varepsilon)\}$$

where

     D is the diameter of the pitch circle
     W is tooth width
     $\varepsilon$ is eccentricity
     $\theta$ angular displacement

within the constraint the D of the inner gear is more than two thirds the D of the outer gear.

Preferably the external teeth of the inner gear are truncated having a generally flat outermost surface and the sinusoidal portion of the contact surface extends from a point radially inwardly of the pitch circle of the gear to the truncated surface.

Preferably the opposite surface of the external teeth are also provided with a sinusoidal profile along at least part of the length of the opposite surface. The sinusoidal profile of the opposite surface having a point of inflection located on the pitch circle of the gear, so that the gear can operate in both forward and reverse directions with the contact surface making contact with the internal teeth of the outer gear in one direction and the opposite surface effectively becoming the contact surface for rotation in the opposite direction.

Preferably the contact and opposite surfaces of the external teeth are a mirror image with respect to one another.

Preferably the contact surface of the internal gears is an inclined flat surface which extends from a radially outer point to the point where the pitch circle of the outer gear intersects with the contact surface.

Preferably the angle of the flat surface with respect to the radius of the outer gear is determined by the derivative of the sinusoid forming the sinusoidal profile of the external teeth at the point of inflection of the sinusoidal profile.

Preferably the contact surface of the internal teeth extends radially inwardly from the point of intersection of the contact surface and the pitch circle of the outer gear to a radially most inner point of the internal teeth.

Preferably the internal teeth have a opposite surface which is a mirror image of the contact surface with the opposite surface becoming the contact surface in reverse motion of the gear system.

Preferred embodiments of the invention will be described, by way of example, with reference to the accompanying drawings, in which:

     Figure 1 is a diagram illustrating a tooth profile of an outer gear of an orbital gear system;
     Figure 2 is a diagram illustrating the tooth profile of an inner gear of an orbital gear system;
     Figure 3 shows gears of Figures 1 and 2 in an assembled position for rotation for illustrating the interaction between the gear profiles of the gears of Figures 1 and 2;
     Figures 4, 5, 6, 7, 8, 9, 10 and 11 are diagrams showing the gears of Figure 3 in various positions as drive is transmitted from one of the gears to another of the gears;
     Figure 11A is a diagram showing teeth profile according to a second embodiment of the invention:
     Figure 12 is a plan view of a transmission embodying the invention;
     Figure 13 is a cross-sectional view through the transmission of Figure 12;
     Figure 14 is a plan view of a transmission according to a further embodiment of the invention;
     Figure 15 is a cross-sectional view through the transmission of Figure 14;

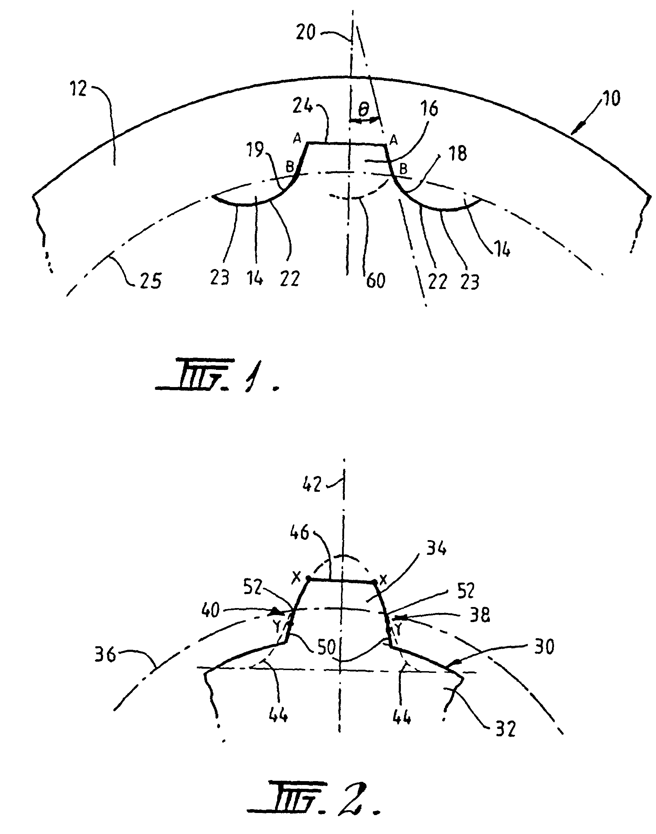

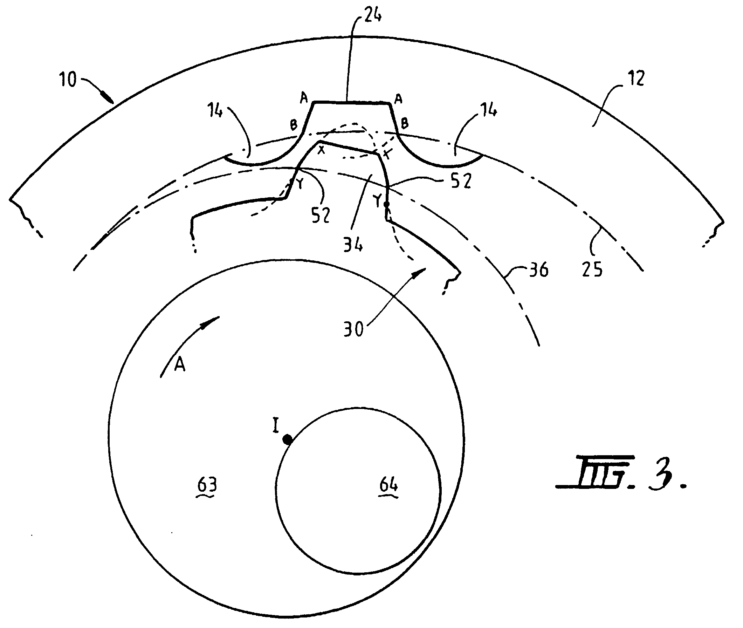

Figure 1 shows a gear profile of an outer gear of an orbital gear system and Figure 2 shows a gear profile of the inner gear of the orbital gear system.

With reference to Figure 1, outer gear 10 has a gear body 12 generally in the form of a ring. The ring 12 has internal teeth 14 (only two of which are shown). A space 16 is provided between adjacent teeth 14.

The teeth 14 have a contact surface 18 and a opposite surface 19. For ease of illustration, the opposite surface 19 of one tooth 14 is shown along with the contact surface 18 of the adjacent tooth 14.

As can be clearly seen in Figure 1, the surfaces 18 and 19 of adjacent teeth 14 are a mirror image of one another about radial line 20. The surfaces 18 and 19 of the same tooth 14 are also a mirror image about a radial line (not shown) through the tooth 14. The surfaces 18 and 19 of each tooth 14 generally meet at an innermost point 22 on clearance surface 23 of each tooth 14.

The surfaces 18 and 19 of adjacent teeth 14 extend outwardly in the radial direction and terminate at flat surface 24 which defines the radially outer point of the space 16 between teeth 14.

The reference to a opposite surface 18 and a contact surface 19 assumes movement of the gear 10 so that the surface 18 will engage teeth of the gears shown in Figure 2. However, if the gear 12 moves in the opposite direction, then the opposite surface 19 of each tooth 14 obviously becomes the contact surface and the surface 18 will become the opposite surface.

With reference to Figure 2, inner gear 30 is shown which has a body 32 which may generally be ring-shaped having a central opening for location on a shaft. The body 30 is provided with teeth 34 (only one shown). The gear 30 has a pitch circle 36, the teeth 34 have a contact surface 38 (which will be the surface which contacts the teeth 14 of the gear 10) and an opposite surface 40. The contact surface 38 and opposite surface 40 are a mirror image of one another about radial line 42. The contact surface 38 and opposite surface 40 are generally of sinusoidal shape as shown by the sinusoid 44 shown in dotted lines. Indeed, the portion of the contact surface 38 and opposite surface 40 between points X and Y is sinusoidal. At points X, the teeth 14 are truncated to provide a radially outer flat surface 46. The profile of the teeth 34 inwardly of the points Y tapers inwardly slightly from the sinusoidal line 44 as shown by reference numerals 50 to provide clearance. The sinusoidal profiles between the points X and Y have points of inflection 52 which are provided on the pitch circle 36 of the gear 30.

Referring back to Figure 1, the flat surfaces of the contact surface 18 and opposite surface 19 between the points A and B of the teeth 14 are inclined or angled as shown by the angle θ with respect to the radial line 20. The angle θ is determined by the derivative of the sinusoidal profile between the points X and Y of the teeth 34 at the point of inflection 52.

As is apparent from Figure 1, the straight section of the teeth 14 between the points A and B merges into a clearance surface 23 which is of arcuate profile as clearly shown in Figure 1. The profile provides a clearance path for the teeth 34 as will be described in detail hereinafter and in the preferred embodiment, the profile basically coincides with a cycloidal path shown by dotted line 60 at which the point B would follow as the gear 10 undergoes orbital motion. The points B are therefore at the cusp of the cycloidal paths 60 and located on the pitch circle 25 of the gear 10. However, the exact configuration of the teeth 14 between the points B can be arbitrarily selected consistent with providing sufficient tooth strength and also clearance for the tooth 34.

Similarly, the exact position of the flat surface 24 of the gear 10 and the flat surface 46 of the teeth 34 is also somewhat arbitrary and can be selected so as to provide adequate clearance. Once again, the exact profile of the surfaces 24 and 46 is not important although generally flat surfaces as shown are preferred.

Whilst it is most preferred that the profile between the points A and B be flat as previously described, it would be possible to provide a sinusoidal profile between the points A and B on the teeth 14. However, this may necessitate a change in the sinusoidal function which defines the surface profile between the points X and Y of the teeth 14 to compensate for the sinusoid applied to the teeth 14.

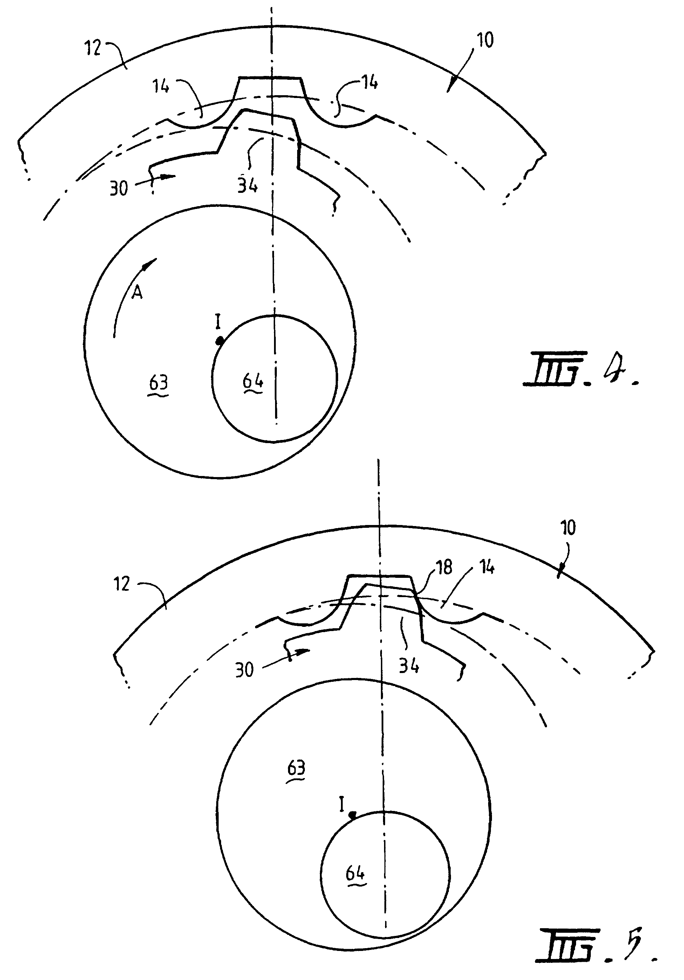

Figure 3 shows the gears 10 and 30 mounted for engagement with one another. In the embodiment shown in Figure 3, the gear 10 is mounted on an eccentric 63 which is in turn coupled to an input shaft 64. The gear 30 is restrained to undergo orbital motion by an orbital control means (which will be described in more detail hereinafter) which may be an orbit control plate, orbital control gear or the like. It should be understood that in other embodiments of the invention, it would be possible to mount the gear 30 for orbital motion rather than the gear 10. Embodiments showing this arrangement will be described hereinafter. Generally the gear which is mounted on the eccentric 63 to undergo orbital motion is an input gear of the gear system and the other gear is the output gear for providing output transmission. Arrangements in which the inner gear is mounted for orbital motion will generally result in the outer gear rotating in the same direction as the input shaft which supplies drive to the inner gear whereas mounting the outer gear to undergo orbital rotation and taking output from the inner gear results in the inner gear undergoing rotation in the reverse direction to the input shaft. This phenomenon can be taken advantage of in specific embodiments using the orbital gear transmission and also can be used to provide a reverse gear.

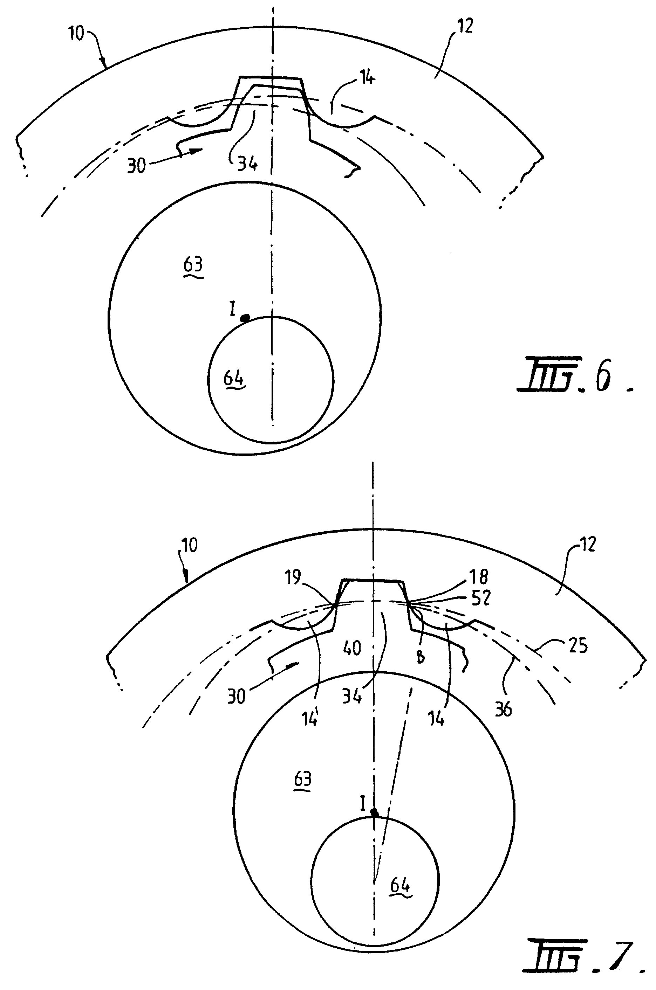

Figure 4 is a view similar to Figure 3 showing the teeth without the designation of the sinusoid shown by dotted line 44, the cycloidal path shown by dotted line 60. The profile of the teeth can therefore be more clearly seen in Figure 4.

With reference to Figure 4, the teeth 34 and 14 are shown in a disengaged position with the outer gear 10 undergoing orbital motion due to rotation of the input shaft 64 and eccentric 63 in the direction of arrow A in Figures 3 and 4. As the gear 10 continues to orbit contact surface 18 of tooth 14 moves towards tooth 34 of the gear 30.

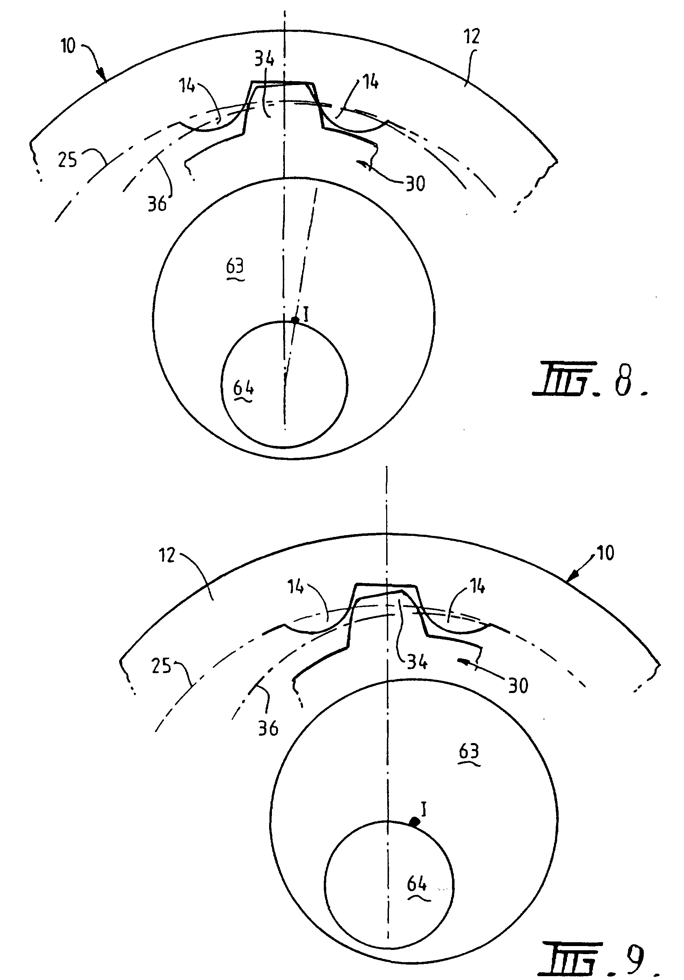

The point marked I on the input shaft 64 in Figures 4 and 5 shows the position of the orbit for reference purposes.

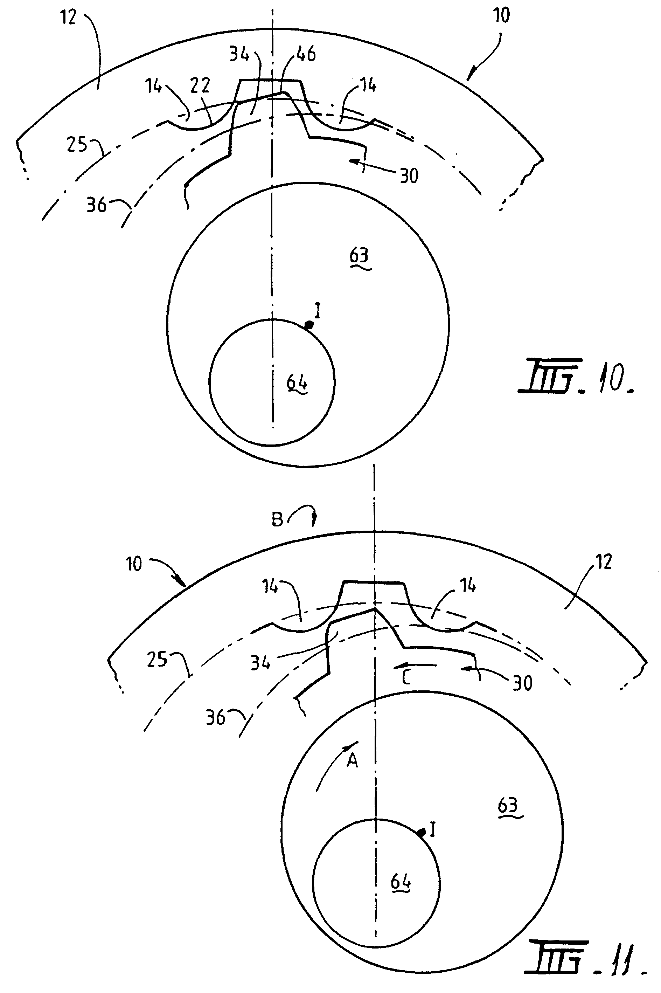

As the orbit continues, the gears move into position shown in Figure 6 where the teeth 14 and 34 are almost in contact, possibly only being separated by an oil film with the teeth 34 sliding relative to the tooth 14 on the oil film, but not making contact with the tooth 14.

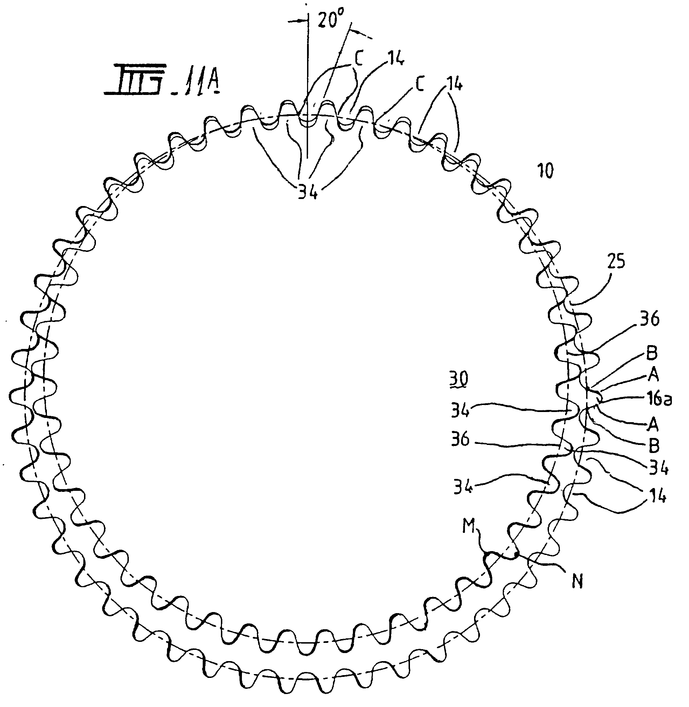

At the position shown in Figure 7, the teeth 34 and 14 make contact with the point of inflection 52 rolling across the point B of the tooth 14. As is clearly shown in Figure 7, the two pitch circles 25 and 36 of the gears 10 and 30 coincide with one another at the point of contact B and drive is transmitted from the gear 10 which is undergoing orbital motion to the gear 30 so as to rotate the gear 30 about its central axis.

The surface 19 of the adjacent tooth labelled 14' in Figure 7 does not make contact with the opposite surface 40 of the tooth 34. A certain amount of backlash may be provided by providing a spacing of, for example, half a millimetre between the opposite surfaces 19 and 40. However, in some embodiments, there could be momentary contact between the opposite surfaces 19 and 14 if desired.

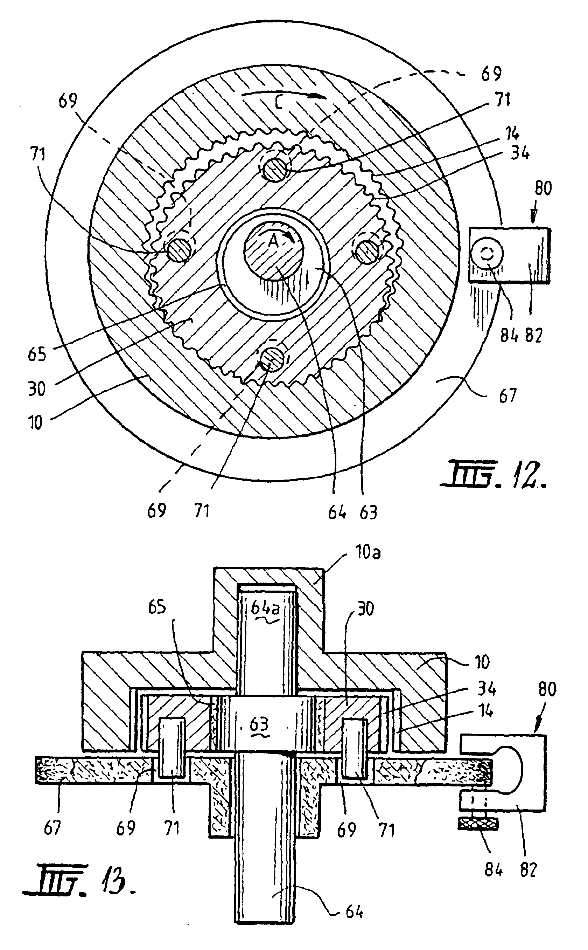

In view of the gear profiles previously described with reference to Figure 1, the point 52 rocks or, in other words, rolls across the point B as drive is transmitted from the gear 14 to the gear 34. Rocking or rolling contact occurs for approximately 4° of the rotation of the gear 30 and as is shown in Figure 8, the gear 34 then begins to disengage from the gear 14.

It should be understood that whilst only a single engagement between two gears 34 and 14 is shown in the figures described to date, a number of gears will be in engagement with one another due to the orbital nature of the gear 10 with respect to the gear 30. As the tooth 34 begins to disengage from the tooth 14 as shown in Figure 8, load is effectively transferred to another pair of teeth 14 and 34 to continue supplying drive from the gear 10 to the gear 30 to cause the gear 30 to rotate about its central axis.

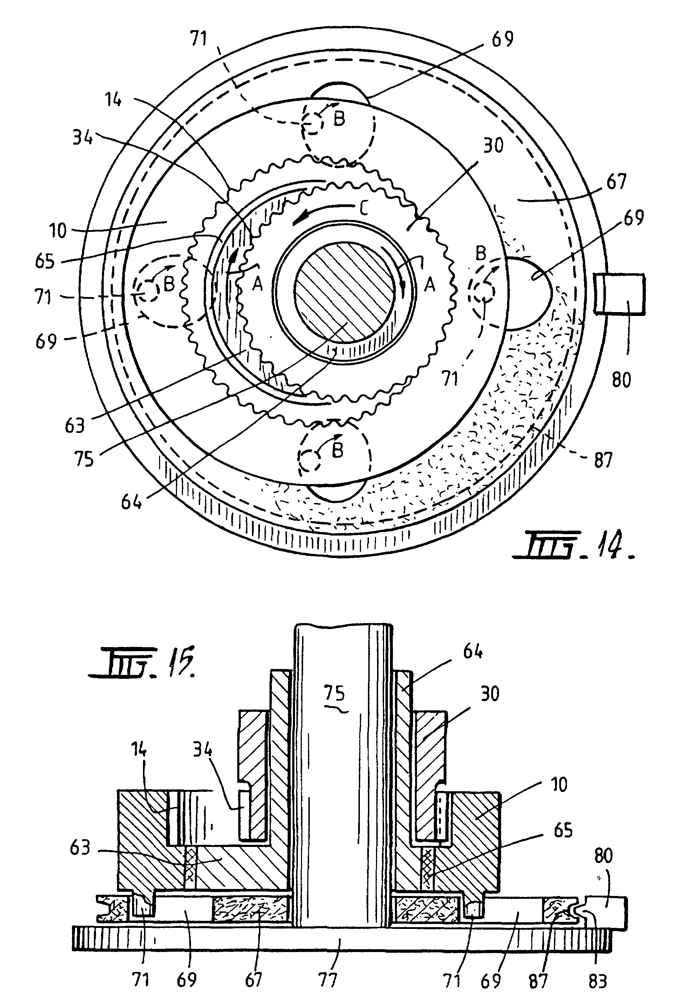

Figure 9 shows the gears clearly disengaged from one another.

Figure 10 shows the flat surface 46 of the gear 34 travelling past the clearance surface 23 of an adjacent gear 14 and just clearing that gear and Figure 11 shows the teeth 14 and 34 clearly disengaged from one another as the orbital movement of the gear 10 progresses.

Thus, as input shaft 64 and eccentric 63 rotate in the direction of arrow A shown in Figure 11, gear 10 generally orbits in the direction of arrow B so as to contact teeth 14 of the gear 30 to cause the gear 13 to rotate in the direction of arrow C opposite to the direction of rotation of the input shaft 64 and eccentric 63 shown by arrow A.

Figure 11A shows a diagram illustrating a complete gear profile for an outer orbiting gear and an inner rotating output gear. Like reference numerals indicate like parts to those in the embodiment of Figures 1 to 11.

In this embodiment of the invention, the gear profile of both the inner gear 30 and outer gear 10 are curved rather than being truncated as in the embodiment of Figures 1 to 11. The profile of the teeth 34 of the inner gear are a complete sinusoid about the pitch circle 36. For example, the curve between the points M and N is a complete sinusoid. The profile of the teeth 14 of the outer gear embody the straight section between the points A and B as per the embodiment of Figures 1 to 11 with the clearance surface 23 being curved in a similar fashion to the embodiment of Figures 1 and 11. The space 16 between the teeth 14 of the outer gear 10 include a curved recess 16a as distinct from the truncated recess 16 of the embodiments of Figures 1 and 11 so as to accommodate the curved sinusoid of the teeth 34.

Figure 11A shows contact C taking place between four pairs of teeth 14, 34 with the contact taking place by rolling or rocking motion substantially at the location where the pitch circles 25 and 36 coincide with one another. As previously explained, the point of inflection of the sinusoidal profile of the teeth 34 basically rolls over the intersection of the pitch circle 25 with the profile of the teeth 14. In the embodiments shown, four sets of teeth are in contact at various locations of rolling motion of the point of inflection of the sinusoidal profile of the tooth 34 across the intersection of the pitch circle 25 and profile of the teeth 14. Contact of each pair of teeth 34 and 14 remains for approximately 4° of the rotation of the gear 30. Thus, for example the pair of teeth 34 and 14 to the right in Figure 11A may be just beginning contact with the point of inflection of the tooth 34 being slightly below the pitch circle 25 of the tooth 14 ready to roll across the pitch circle 25. The point of contact C of the pair of teeth 34 and 14 on the left in Figure 11A may have completed the rolling motion across the pitch circle 25 and the contact between these two teeth is just about ready to discontinue.

Computerised testing of the gear profiles according to Figure 11A show a comparative PCD of 93%, a PCD slip of 0, radial motion of 0.007 mm, interference of 0 and a pressure angle of 20°.

Figures 12 and 13 show a first embodiment of an orbital gear transmission which use teeth profile as per the embodiment previously described.

Like reference numerals will be used in the embodiment of Figures 12 and 13 as they have been used in the description of the gears according to Figures 1 to 11.

An input shaft 64 is provided with an integral eccentric 63. In this embodiment, the inner gear 30 is mounted on the eccentric 63, but as will be disclosed hereinafter with reference to other embodiments, the outer gear 10 could be provided on the eccentric 63 as is mentioned above. A bearing 65 is provided between the eccentric 63 and the gear 30. An orbit control plate 67 is mounted below the gear 30 and includes four circular openings 69. The gear 30 is provided with four pins 71 which project into the openings 69 and the plate 67 is fixed stationary by a brake mechanism 80 which may include a fixed block 82 and a screw member 84 which can be screwed into the block 82 to clamp onto the plate 67 to thereby hold the plate 67 stationary with respect to the block 82. The brake mechanism 80 shown in Figures 12 and 13 is schematic only and other forms of brake mechanism will be readily apparent for selectively holding the plate 67 stationary and releasing the plate as desired.

Rotation of the input shaft 64 will cause the eccentric 63 to rotate which will in turn drag the gear 30 in orbital fashion by virtue of engagement of the pins 71 in the opening 69 so that the pins 71 effectively slide on one half of the inner surface of the respective openings 69 to thereby restrain the motion of the gear 30 to an orbital motion generally in the same direction as the direction of rotation of the input shaft 64 and eccentric 63 (such as that shown by arrow A in Figure 12).

As the gear 30 orbits the teeth 34 of the gear 30 will engage with the teeth 14 of the gear 10 so as to cause the gear 10 to rotate in the direction of arrow C in Figure 12 (which in the arrangement shown in Figures 12 and 13 is the same as the direction of arrow A).

Rotation of the outer gear 10 provides output power and can be taken off, for example, from integral sleeve 10a of the gear 10 which is supported on extension 64a of the input shaft 64 so as to provide output rotary power with a drive ratio which is set by the orbital'transmission provided by the gears 30 and 10.

In order to release the transmission (that is place the transmission into neutral) the brake 80 is simply released so that the plate 67 is released to thereby cause the plate 67 to merely rotate with the eccentric 63 and gear 30 so that the transmission effectively freewheels without any drive being transmitted to the gear 10. Release of the plate 67 effectively releases the gear 30 from the restrained orbital motion so that the gear 30 rotates with the eccentric 30 with the pins 71 simply driving the released plate 67 so that the plate 67 rotates with the gear 30 and eccentric 63.

Figures 14 and 15 show a further embodiment of the invention which is similar to the arrangement described with reference to Figures 1 to 11 in which the outer gear 10 is restrained for orbital motion and the inner gear 30 is used to provide output power take off.

In this embodiment, a mast 75 is provided on a base plate 77. Input shaft 64 is hollow and locates over mast 75. The input shaft 64 carries integral eccentric 63 which in turn mounts outer gear 10 via bearing 65. Inner gear 30 is provided about input shaft 64 for rotation relative to the input shaft 64.

Orbit control plate 67 is provided with four openings 69 and is provided on the base plate 77 and has a brake 80, which in the arrangement shown in Figures 14 and 15, is provided with a projection 83 which can locate in a groove 87 provided in the outer periphery of the plate 67 to thereby lock the plate 67 fixed stationary.

In this embodiment, the outer gear 10 is provided with the pin 71 which locate in the hole 69 in the orbit control plate 67 so that when the input shaft 64 and eccentrics 63 are rotated, the gear 10 is restrained to undergo orbital motion by virtue of the pins 71 being retained within the opening 69.

The orbital motion of the outer gear 10 in the direction of arrows B shown in Figure 14 causes inner gear 10 to rotate in the opposite direction C to the input shown by arrow A as has been described in more detail with reference to Figures 1 to 11.

Thus, by rotating the input shaft 64 in the direction of arrow A, drive can be provided to the gear 30 in the opposition direction as shown by arrow C with a ratio set by the orbital transmission provided by the gears 30 and 10.

In this embodiment, the gear 30 is provided with an upper portion 30a from which output drive can be taken if desired.

## Claims

1. An orbital gear system, including:

   an inner gear (30) and an outer gear (10);
   the inner gear (30) having a plurality of external teeth (34), the plurality of external teeth having a contact surface (38) and a opposite surface (40), the inner gear having a pitch circle (36), the contact surface having a point of inflection (52) located on the pitch circle (36) of the inner gear;
   the outer gear (10) having a plurality of internal teeth (14) for engagement with the external teeth (34) of the inner gear (30), the internal teeth (14) having a contact surface (18) for engaging the contact surface (38) of the external teeth (34) of the inner gear (30), the outer gear having a pitch circle (25); and **characterised by**

   wherein, when the inner gear (30) and outer gear (10) are assembled for transmission of power from one of the gears to the other of the gears, the inner and outer gear undergo substantially radial engagement and point contact with the point of inflection (52) of the external teeth (34) engaging and rocking over only a point (B) on the contact surface (18) of the internal teeth (14) substantially where the pitch circle (25) of the outer gear intersects the contact surface (38) of the outer gear, wherein the contact surface (38) has a sinusoidal profile.

2. The orbital gear system of claim 1, wherein the sinusoidal profile is defined by the following equation:

$$y = f(D) \, Sin\{\pi WD\theta g \, (\varepsilon)\}$$

   where

   D is the diameter of the pitch circle
   W is tooth width
   $\varepsilon$ is eccentricity

θ angular displacement

within the constraint the D of the inner gear is more than two thirds the D of the outer gear.

3. The orbital gear system of claim 1, wherein the external teeth (34) of the inner gear (30) are truncated having a generally flat outermost surface (24) and the sinusoidal portion of the contact surface (38) extends from a point radially inwardly of the pitch circle of the gear to the truncated surface.

4. The orbital gear system of claim 1, wherein the opposite surface (40) of the external teeth are also provided with a sinusoidal profile along at least part of the length of the opposite surface (40), the sinusoidal profile of the opposite surface (40) having a point of inflection (52) located on the pitch circle (36) of the gear, so that the gear can operate in both forward and reverse directions with the contact surface (38) making contact with the internal teeth (14) of the outer gear (10) in one direction and the opposite surface (40) effectively becoming the contact surface for rotation in the opposite direction.

5. The orbital gear system of claim 1, wherein the contact (38) and opposite surfaces (40) of the external teeth (34) are a mirror image with respect to one another.

6. The orbital gear system of claim 1, wherein the contact surface (38) of the internal gears (30) is an inclined flat surface which extends from a radially outer point to the point where the pitch circle of the outer gear intersects with the contact surface (38).

7. The orbital gear system of claim 1, wherein the angle of the flat surface with respect to the radius of the outer gear is determined by the derivative of the sinusoid forming the sinusoidal profile of the external teeth (34) at the point of inflection (52) of the sinusoidal profile.

8. The orbital gear system of claim 1, wherein the contact surface (38) of the internal teeth (34) extends radially inwardly from the point of intersection of the contact surface and the pitch circle (25) of the outer gear (10) to a radially most inner point of the internal teeth.

9. The orbital gear system of claim 1, wherein the internal teeth (34) have a opposite surface (40) which is a mirror image of the contact surface (38) with the opposite surface becoming the contact surface in reverse motion of the gear system.

10. An orbital gear system according to claim 1, wherein the inner gear (30) and outer gear (10) have a pitch circle diameter (PCD) ratio of about 93%.

**Patentansprüche**

1. Planetenradsystem, beinhaltend ein inneres Zahnrad (30) und ein äußeres Zahnrad (10); wobei das innere Zahnrad (30) mehrere Außenzähne (34) aufweist, die mehreren Außenzähne eine Kontaktoberfläche (38) und eine gegenüberliegende Oberfläche (40) aufweisen, das innere Zahnrad einen Wälzkreis (36) aufweist, und die Kontaktoberfläche einen auf dem Wälzkreis (36) des inneren Zahnrades gelegenen Wendepunkt (52) aufweist; wobei das äußere Zahnrad (10) mehrere Innenzähne (14) zum Eingriff mit den Außenzähnen (34) des inneren Zahnrades (30) aufweist, die Innenzähne (14) eine Kontaktoberfläche (18) zum Eingreifen mit der Kontaktoberfläche (38) der Außenzähne (34) des inneren Zahnrades (30) aufweisen, und das äußere Zahnrad einen Wälzkreis (25) aufweist, **dadurch gekennzeichnet, daß** das innere und das äußere Zahnrad dann, wenn das innere Zahnrad (30) und das äußere Zahnrad (10) zur Übertragung von Kraft von einem der Zahnräder zum anderen der Zahnräder zusammengesetzt sind, einen im Wesentlichen radialen Eingriff und Punktkontakt erleben, wobei der Wendepunkt (52) der Außenzähne (34) im Wesentlichen dort, wo der Wälzkreis (25) des äußeren Zahnrades die Kontaktoberfläche (38) des äußeren Zahnrades schneidet, mit nur einem Punkt (B) an der Kontaktoberfläche (18) der Innenzähne (14) eingreift und über diesen schaukelt, wobei die Kontaktoberfläche (38) ein sinusförmiges Profil aufweist.

2. Planetenradsystem nach Anspruch 1, wobei das sinusförmige Profil durch die folgende Gleichung definiert ist:

$$y = f\,(D)\,\mathrm{Sin}\{\pi W D \theta g\,(\varepsilon)\,\}$$

wobei

D der Durchmesser des Wälzkreises ist,
W die Zahnbreite ist,
$_\varepsilon$ die Exzentrizität ist,
θ die Winkelverschiebung ist,

vorausgesetzt, daß das D des inneren Zahnrades mehr als zwei Drittel des D des äußeren Zahnrades beträgt.

3. Planetenradsystem nach Anspruch 1, wobei die Außenzähne (34) des inneren Zahnrades (30) abgeflacht sind und eine im Allgemeinen flache äußerste Oberfläche (24) aufweisen, und sich der sinusförmige Abschnitt der Kontaktoberfläche (38) von einem radial einwärts des Wälzkreises des Zahnrades gelegenen Punkt zur abgeflachten Oberfläche erstreckt.

4. Planetenradsystem nach Anspruch 1, wobei die gegenüberliegende Oberfläche (40) der Außenzähne entlang zumindest eines Teils der Länge der gegenüberliegenden Oberfläche (40) ebenfalls mit einem sinusförmigen Profil versehen ist, wobei das sinusförmige Profil der gegenüberliegenden Oberfläche (40) einen auf dem Wälzkreis (36) des Zahnrades gelegenen Wendepunkt (52) aufweist, so daß das Zahnrad sowohl in der Vorwärts- als auch in der Rückwärtsrichtung tätig sein kann, wobei in einer Richtung die Kontaktoberfläche (38) den Kontakt mit den Innenzähnen (14) des äußeren Zahnrades (10) herstellt, und die gegenüberliegende Oberfläche (40) wirksam zur Kontaktoberfläche für die Drehung in die entgegengesetzte Richtung wird.

5. Planetenradsystem nach Anspruch 1, wobei die Kontaktoberflächen (38) und die gegenüberliegenden Oberflächen (40) der Außenzähne (34) in Bezug zueinander spiegelbildlich sind.

6. Planetenradsystem nach Anspruch 1, wobei die Kontaktoberfläche (38) des inneren Zahnrades (30) eine geneigte flache Oberfläche ist, die sich von einem radial äußeren Punkt zu dem Punkt erstreckt, an dem der Wälzkreis des äußeren Zahnrades die Kontaktoberfläche (38) schneidet.

7. Planetenradsystem nach Anspruch 1, wobei der Winkel der flachen Oberfläche in Bezug auf den Radius des äußeren Zahnrades durch die Ableitung der Sinuskurve, welche das sinusförmige Profil der Außenzähne (34) bildet, am Wendepunkt des sinusförmigen Profils (52) bestimmt wird.

8. Planetenradsystem nach Anspruch 1, wobei sich die Kontaktoberfläche (38) der Innenzähne (34) vom Schnittpunkt der Kontaktoberfläche und dem Wälzkreis (25) des äußeren Zahnrades (10) radial einwärts zu einem radial innersten Punkt der Innenzähne erstreckt.

9. Planetenradsystem nach Anspruch 1, wobei die Innenzähne (34) eine gegenüberliegende Oberfläche (40) aufweisen, die ein Spiegelbild der Kontaktoberfläche (38) ist, wobei die gegenüberliegende Oberfläche bei der Rückwärtsbewegung des Getriebesystems zur Kontaktoberfläche wird.

10. Planetenradsystem nach Anspruch 1, wobei das innere Zahnrad (30) und das äußere Zahnrad (10) ein Verhältnis des Wälzkreisdurchmessers (PCD) von etwa 93 % aufweisen.

## Revendications

1. Système d'engrenage planétaire, comportant: un engrenage intérieur (30) et un engrenage extérieur (10), l'engrenage intérieur (30) ayant une pluralité de dents extérieures (34), la pluralité de dents extérieures ayant une surface de contact (38) et une surface opposée (40), l'engrenage intérieur ayant un cercle primitif (36), la surface de contact ayant un point d'inflexion (52) situé sur le cercle primitif (36) de l'engrenage intérieur,

   l'engrenage extérieur (10) ayant une pluralité de dents intérieures (14) destinées à venir en prise avec les dents extérieures (34) de l'engrenage intérieur (30), les dents intérieures (14) ayant une surface de contact (18) destinée à venir en contact avec la surface de contact (38) des dents extérieures (34) de l'engrenage intérieur (30), l'engrenage extérieur ayant un cercle primitif (25), et **caractérisé en ce que**

   lorsque l'engrenage intérieur (30) et l'engrenage extérieur (10) sont assemblés pour une transmission de puissance depuis l'un des engrenages vers l'autre des engrenages, les engrenages intérieur et extérieur subissent une mise en prise sensiblement radiale et un contact ponctuel, le point d'inflexion (52) des dents extérieures (34) venant en contact uniquement avec un point (B) de la surface de contact (18) des dents intérieures (14) et basculant sur celui-ci pratiquement où le cercle primitif (25) de l'engrenage extérieur recoupe la surface de contact (38) de l'engrenage extérieur, la surface de contact (38) ayant un profil sinusoïdal.

2. Système d'engrenage planétaire selon la revendication 1, dans lequel le profil sinusoïdal est défini par l'équation qui suit:

$$y = f(D) \, \mathrm{Sin}\{\pi W D \theta g(\varepsilon)\}$$

   où

   D est le diamètre du cercle primitif
   W est la largeur de dent
   $\varepsilon$ est l'excentricité
   $\theta$ est le déplacement angulaire

   avec pour contrainte que D de l'engrenage intérieur est supérieur à deux tiers de D de l'engrenage extérieur.

3. Système d'engrenage planétaire selon la revendication 1, dans lequel les dents extérieures (34) de l'engrenage intérieur (30) sont tronquées ayant une surface la plus à l'extérieur généralement plate (46) et la partie sinusoïdale de la surface de contact (38) s'étendant depuis un point situé radialement vers l'intérieur du cercle primitif de l'engrenage vers la surface tronquée.

4. Système d'engrenage planétaire selon la revendication 1, dans lequel la surface opposée (40) des dents extérieures est aussi munie d'un profil sinusoïdal le long d'au moins une partie de la longueur de la surface opposée (40), le profil sinusoïdal de la surface opposée (40) ayant un point d'inflexion (52) situé sur le cercle primitif (36) de l'engrenage, de sorte que l'engrenage peut agir à la fois dans le sens vers l'avant et vers l'arrière, la surface de contact (38) venant en contact avec les dents intérieures (14) de l'engrenage extérieur (10) dans un sens, et la surface opposée (40) devenant de manière efficace la surface de contact pour une rotation dans le sens opposé.

5. Système d'engrenage planétaire selon la revendication 1, dans lequel les surfaces de contact (38) et les surfaces opposées (40) des dents extérieures (34) sont une image miroir l'une de l'autre.

6. Système d'engrenage planétaire selon la revendication 1, dans lequel la surface de contact (38) de l'engrenage intérieur (30) est une surface plate inclinée qui s'étend à partir d'un point radialement extérieur vers le point où le cercle primitif de l'engrenage extérieur recoupe la surface de contact (38).

7. Système d'engrenage planétaire selon la revendication 1, dans lequel l'angle de la surface plate par rapport au rayon de l'engrenage extérieur est déterminé par la dérivée de la sinusoïde formant le profil sinusoïdal des dents extérieures (34) au niveau du point d'inflexion (52) du profil sinusoïdal.

8. Système d'engrenage planétaire selon la revendication 1, dans lequel la surface de contact (38) des dents intérieures (34) s'étend radialement vers l'intérieur à partir du point d'intersection de la surface de contact et du cercle primitif (25) de l'engrenage extérieur (10) jusqu'au point radialement le plus à l'intérieur des dents intérieures.

9. Système d'engrenage planétaire selon la revendication 1, dans lequel les dents intérieures (34) ont une surface opposée (40) qui est une image miroir de la surface de contact (38), la surface opposée devenant la surface de contact dans un déplacement inverse du système d'engrenage.

10. Système d'engrenage planétaire selon la revendication 1, dans lequel l'engrenage intérieur (30) et l'engrenage extérieur (10) ont un rapport entre diamètre de cercle primitif (PCD) d'environ 93 %.

_ℿ. 1._

_ℿ. 2._

EP 0 995 055 B1

FIG. 3.

FIG. 4.

FIG. 5.

FIG. 6.

FIG. 7.

$\overline{III}$. 8.

$\overline{III}$. 9.

FIG. 10.

FIG. 11.

FIG. 11A

FIG. 12.

FIG. 13.

FIG. 14.

FIG. 15.